# EUROPEAN PATENT APPLICATION

(11) **EP 1 338 383 A1**
(43) Date of publication of application: **27.08.2003**
(21) Application number: 03380040.0
(22) Date of filing: 24.02.2003
(51) Int. Cl.: B24B 27/00, B24B 41/02, B24B 41/04, B24B 49/00, B24B 47/22

(54) **A rotating machining unit for a grinding machine**

(30) Priority: 26.02.2002 ES 200200461
(71) Applicant: Danobat, S. Coop., 20870 Elgoibar (Guipuzkoa) (ES)
(72) Inventor: Vizcaino, Elias de Luis, 20870 Elgoibar (Gipuzkoa) (ES)

(57) **Abstract**

"A rotating machining unit for a grinding machine which includes a base (1), a body (2) which rotates on said base (1) in relation to a rotation shaft(3), at least one wheelhead (4) arranged on said body (2), means for turning said body (2) by the rotation of a motor (5) and a rotary encoder (6) placed concentrically to the rotation shaft (3). The means for turning the body (2) include a ball spindle (7) that turns together with the motor (5), a nut (8) threaded onto said ball spindle (7) and fixed to a rotating shaft (9), linked to the body (2) with the possibility of turning, and a rotating shaft (10) by which the ball spindle (7) is linked to the base (1) with the possibility of turning."

## Description

### TECHNICAL FIELD

The present invention relates to grinding machines, and more specifically to systems to rotate wheelheads on grinding machines.

### BACKGROUND OF THE INVENTION

Grinding machines are known that have the possibility of turning the wheelhead to vary the angle of the grinder in relation to the piece to be ground.

US 4,897,964 describes a grinding machine where the wheelhead is turned by a worm transmission. This type of transmission systems obtain a high reduction, but at the expense of very low performance and not very good positioning accuracy, unless components of very high mechanical quality and therefore very costly are used.

There are also grinding machines that include a rotating plate on which the wheelhead is supported. There are rotating plates which use frontal notching for positioning the head. In such cases, the accuracy obtained is good, but the number of possible positions is limited by the number of teeth in the frontal notching. There are systems using frontal notching which, to increase the number of possible positions, add a further drive limited to the angle between consecutive teeth, which increases the complexity and cost of the plate.

On the other hand, there are also rotating plates with continuous positioning. The drawback of this type of plates is its elevated cost.

### DESCRIPTION OF THE INVENTION

The object of the invention is to provide a rotating machining unit for a grinding machine, as defined in the claims.

The rotary unit of the invention comprises a base, a body rotating on said base in relation to a rotating shaft, at least one wheelhead arranged on said body, means for turning said body by the rotation of a motor, means for fixing the body to the base, and a rotary encoder to detect the angular position of said body. Said rotary encoder is placed concentrically to the rotating shaft of the body, thus providing great precision in the measurement of the angular position of the body and so of the wheelhead attached to said body.

The means for the rotation of the body include a ball spindle that turns together with the motor, a threaded nut on said ball spindle fixed to a second rotation shaft linked to the body with the possibility of turning, and a third rotation shaft by which the ball spindle is linked to the base with the possibility of turning.

In the rotary unit of the invention, the distance between the rotation shaft of the body and the nut threaded on to the ball spindle is greater than the radius of the surface on which the body turns, so ensuring that the rotation is extremely precise, because the greater the distance between the rotation shaft of the body and the nut, the greater the linear displacement of the nut corresponding to the same angular displacement. Thus, for example, for the same angular displacement of the body, the rotation of the ball spindle is greater than the rotation that would correspond to a worm using a crown with that radius.

On the other hand, because of the large distance between the rotation shaft of the body and the nut, the surface for the support of the body on the base is greater and, in addition, the means for securing the body to the base can be further from the rotation shaft, so enhancing the fixing.

The three rotating shafts of the rotating unit of the invention include pre-loaded angular contact bearings. This ensures that there is no play, and helps to ensure that the transmission system is very accurate. Therefore, the rotating unit of the invention guarantees the precision of the positioning of the grinder, providing a solution that is significantly cheaper than systems using rotating plates.

These and other features of the invention will become apparent in the detailed disclosure of one embodiment of the invention.

### DESCRIPTION OF THE DRAWINGS

FIG. 1 is an elevated view of one embodiment of the invention.
FIG. 2 is a plan view of the embodiment of FIG. 1.
FIG. 3 is a plan view of the embodiment of FIG. 1, turned through a given angle.
FIG. 4 is a detail of the system of transmission of the turn in the embodiment of FIG. 1.

### DETAILED DISCLOSURE OF THE INVENTION

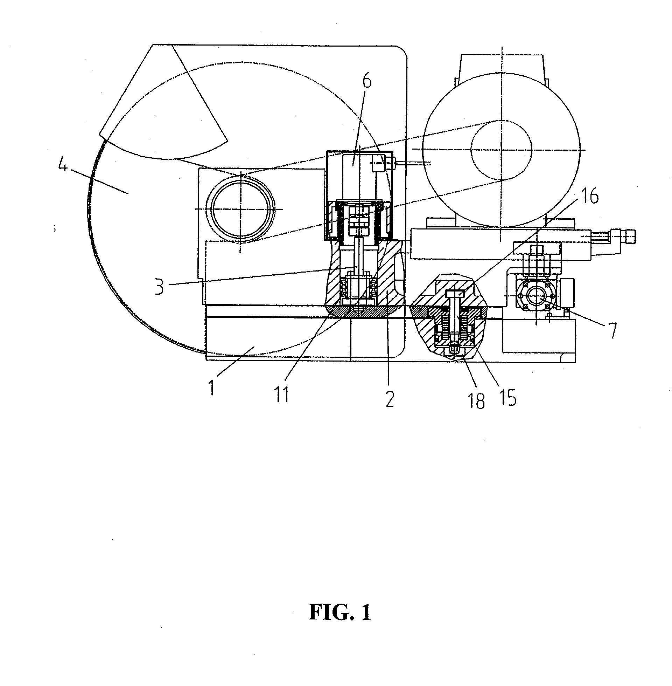

With references to figures 1, 2 and 3, the rotating machining unit of the invention comprises a base 1, a body 2 turning on said base 1 in relation to a rotating shaft 3, at least one wheelhead 4 placed on said body 2, means for turning said body 2 by the rotation of a motor 5, means for fixing the body 2 to the base 1, and a rotary encoder 6 to detect the angular position of the body 2. Said rotary encoder 6 is placed concentrically to the rotation shaft 3, so making the measurement of the angular precision extremely accurate.

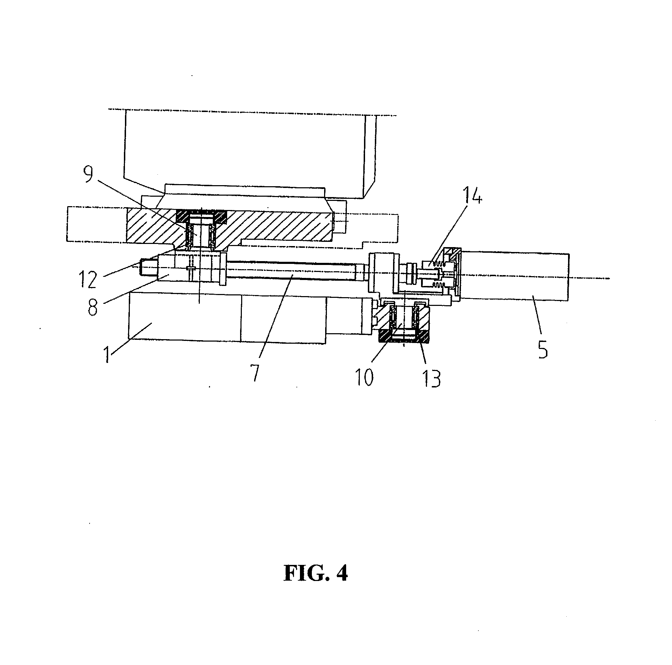

The means for turning the body 2, shown in detail in figure 4, include a ball spindle 7 that turns together with the motor 5, a nut 8 threaded on said ball spindle 7 and fixed to a rotation shaft 9 which is linked, with possibility of turning, to the body 2, and a rotation shaft 10 by which the ball spindle 7 is linked to the base 1 with the possibility of turning.

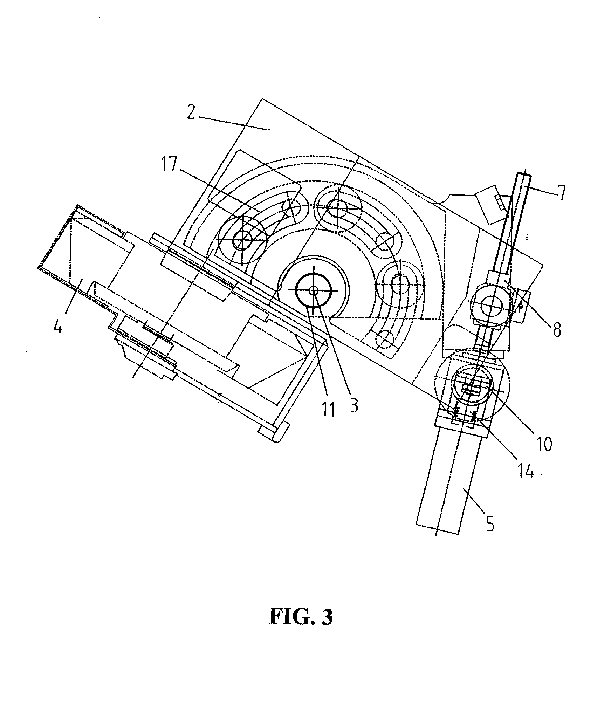

As shown in figure 3, the distance between the rotating shaft 3 and the nut 8 is greater than the radius of the surface on which the body 2 turns. Therefore, for the same angular displacement of the body 2, there is a rotation of the ball spindle 7 that is greater than the one that would correspond to a worm using a crown with that radius.

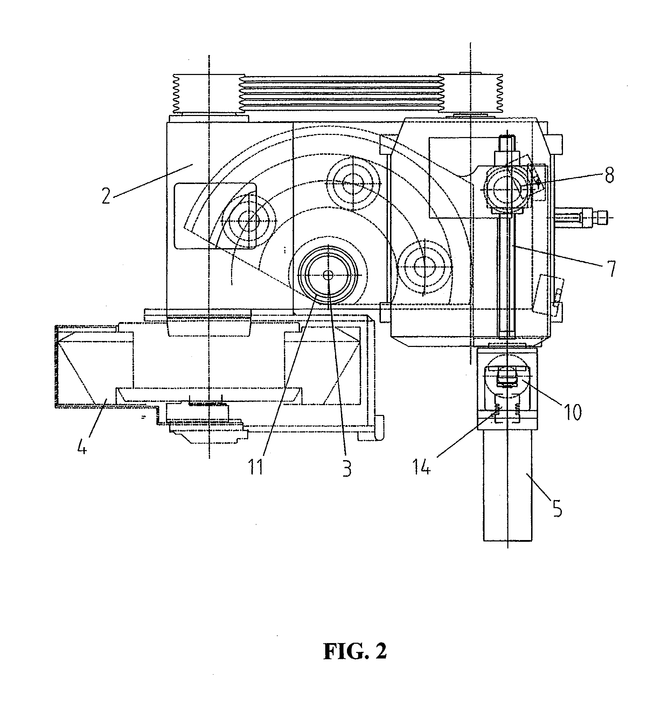

The rotating shafts 9 and 10 allow the ball spindle 7 and motor 5 to adapt to the rotating movement of the body 2. As the body 2 turns in relation to the rotating shaft 3, the nut 8 turns in relation to the body 2 by means of the rotating shaft 9, displacing the ball spindle 7 with it, said ball spindle 7 turning, with the motor 5, in relation to the rotating shaft 10 linked to the base 1. Figures 2 and 3 show how this movement is performed.

The rotating shafts 3, 9 and 10 on the rotating unit of the invention include pre-loaded angular contact bearings 11, 12 and 13, which ensure there is no play in said rotating shafts. On the other hand, the ball spindle 7 is linked to motor 5 by means of an elastic coupling 14.

The means for fixing the body 2 to the base 1 include a plurality of mooring braces 15 on the base 1, whose ends 16 are housed in concentric grooves 17 (shown in figure 3) in the body 2. Said mooring braces 15 hold the body 2 on the base 1 when pressure is not supplied to sealed chambers 18 on the opposite ends of said mooring braces 15. When pressure is supplied to said chambers 18, the mooring braces 15 are displaced vertically, so releasing the body 2. This embodiment includes three mooring braces 15, with their three corresponding concentric grooves 17.

In general, base 1 of the rotating unit is placed on two carriages (not shown in the figures), perpendicular to each other and fixed, so that the body 2 has the following movements: a linear displacement together with the base 1 in a direction X on one of the said carriages, a linear displacement together with the base 1 in a direction Z on the second of said carriages, and an angular displacement on base 1 in relation to the rotating shaft 3.
Therefore, because the perpendicular carriages do not turn, the reference axes X and Z remain fixed at all times.

## Claims

1. A rotating machining unit for a grinding machine, said rotating unit comprising a base (1), a body (2) that turns on said base (1) in relation to a rotating shaft (3), at least one wheelhead (4) arranged on said body (2), means for turning said body (2), a motor (5), means for fixing the body (2) to the base (1) and a rotary encoder (6) to detect the angular position of the body (2), **characterised in that** said rotary encoder (6) is placed concentrically to the rotating shaft (3) and the means for turning the body (2) include a ball spindle (7) which turns together with the motor (5), a nut (8) threaded on to said ball spindle (7) and fixed to a rotating shaft (9) linked with the possibility of rotation to the body (2), and a rotating shaft (10) by means of which the ball spindle (7) is linked to the base (1) with the possibility of turning.

2. A rotating machining unit for a grinding machine according to claim 1, **characterised in that** the rotation shafts (3,9,10) include pre-loaded angular contact bearings (11,12,13).

3. A rotating machining unit for a grinding machine according to any of the preceding claims, **characterised in that** the ball spindle (7) is linked to the motor (5) by means of an elastic coupling (14).

4. A rotating machining unit for a grinding machine according to any of preceding claims, **characterised in that** the means for fixing the body (2) to the base (1) include a plurality of mooring braces (15) in the base (1), the ends of which (16) are housed in concentric grooves (17) in the body (2), said mooring braces (15) securing said body (2) to the base (1) when pressure is not supplied to sealed chambers (18) placed at the opposite end of said mooring braces (15), and releasing said body (2) when pressure is supplied to said chambers (18).

5. A rotating machining unit for a grinding machine according to any of preceding claims, **characterised in that** the base (1) is placed on two carriages, perpendicular to each other, so that the body (2) has a linear displacement together with the base (1) in a first direction on one of the said carriages, a linear displacement together with the base (1) in a second direction perpendicular to the first direction on the second of said carriages, and an angular displacement on base (1) in relation to the rotating shaft (3).
